(19) Europäisches Patentamt
European Patent Office
Office européen des brevets

(11) **EP 4 353 425 A1**

(12) **EUROPEAN PATENT APPLICATION**
published in accordance with Art. 153(4) EPC

(43) Date of publication:
**17.04.2024 Bulletin 2024/16**

(21) Application number: **22819911.3**

(22) Date of filing: **28.03.2022**

(51) International Patent Classification (IPC):
**B25J 9/22** *(2006.01)*

(52) Cooperative Patent Classification (CPC):
**B25J 9/1656**

(86) International application number:
**PCT/JP2022/015153**

(87) International publication number:
**WO 2022/259723 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.06.2021 JP 2021098120**

(71) Applicant: OMRON Corporation
Kyoto 600-8530 (JP)

(72) Inventors:
• BOUBOU, Soma
  Kyoto-shi, Kyoto 600-8530 (JP)
• TAKANISHI, Kanji
  Kyoto-shi, Kyoto 600-8530 (JP)
• HASEGAWA, Yuki
  Kyoto-shi, Kyoto 600-8530 (JP)

(74) Representative: SONN Patentanwälte GmbH & Co
KG
Riemergasse 14
1010 Wien (AT)

(54) **GRASP INFORMATION GENERATION DEVICE, METHOD, AND PROGRAM**

(57) An acquisition section 30 acquires target object information indicating a three dimensional shape of a target object for gripping by a gripping section, and gripping section information related to a shape of the gripping section. An extraction section (50) performs clustering on pairs of two points on the target object that are pairs satisfying a condition based on the target object information and the gripping section information acquired by the acquisition section (30) and are pairs remaining after similar pairs have been removed, and extracts as gripping points a pair representative of each cluster. Based on the gripping points extracted by the extraction section (50), the generation section (60) generates grasp information indicating a relative positional relationship between the target object and the gripping section for a case of the target object being gripped by the gripping section.

FIG.4

TARGET OBJECT INFORMATION, GRIPPING SECTION INFORMATION

EP 4 353 425 A1

**Description**

Technical Field

The present disclosure relates to a grasp information generation device, a grasp information generation method, and a grasp information generation program.

Background Art

There is a need to grip a workpiece appropriately with a robot hand in order to achieve a successful robot operation, such as pick-and-throw, pick-and-place, pick-and-assembly, or the like of a workpiece using a robot hand. In order to generate action information to grip a workpiece using such a robot hand, grasp information is prepared in advance about a relative positional relationship between the robot hand and the workpiece.

As technology related to generating grasp information, for example for an industrial end effector such as a gripper, suction plate, or the like, technology is proposed to generate grasp information using a computer aided design (CAD) model of a target object (see Non-Patent Document 1). This technology includes performing pre-processing on a mesh model, which is a model of a target object, by separating superimposed planes in the mesh model. This technology employs the separated planes to identify tangent points and synthesize a gripping orientation for a general purposed industrial end effector.

Prior Art Literature

Non-Patent Documents

Non-Patent Document 1: "Planning Grasps with Suction Cups and Parallel Grippers Using Superimposed Segmentation of Object Meshes" by Weiwei Wan, Kensuke Harada, Fumio Kanehiro in IEEE Transactions on Robotics, Volume 37, Issue 1, 2021.02.

SUMMARY OF INVENTION

Technical Problem

However there is a problem of a lack of consistency with the technology of Non-Patent Document 1 due to adopting a parametric based analysis approach. Namely, there is a need to adjust many parameters in the technology described in Non-Patent Document 1. This means that the finally generated grasp information depends on the magnitude of values selected for these parameters, and the selection of parameters influences the quality of the generated grasp information. Moreover, there is a need for specialist knowledge related to parameter adjustment methods when many parameters are adjusted, and this makes it difficult to generate consistent grasp information that can be relied on for a user lacking such specialist knowledge. Furthermore, the technology described in Non-Patent Document 1 also has a problem of there being an enormous volume of computation to adjust the many such parameters and in a mesh segmentation or the like employed to generate a mesh model, and a problem of a longer computation time needed to generate the grasp information due to performing impact detection two times or more to generate non-interfering grasp information. Moreover, due to adopting a parametric based analysis approach in the technology described in Non-Patent Document 1, sometimes redundant grasp information is also generated, such a grasp information for a griping orientation that is not realistic or the like. Furthermore, the technology of Non-Patent Document 1 considers only external gripping for sandwiching and gripping the target object from the outside and is not applicable to internal gripping for gripping by being pressed outward inside a ring shaped target object, for example.

In consideration of the above circumstances, an object of the present disclosure is to generate consistent grasp information while suppressing computation time.

Solution to Problem

In order to achieve the above object, a grasp information generation device according to the present disclosure is configured including an acquisition section that acquires target object information indicating a three dimensional shape of a target object for gripping by a gripping section, and gripping section information related to a shape of the gripping section, an extraction section that performs clustering on pairs of two points on the target object that are pairs satisfying a condition based on the target object information and the gripping section information acquired by the acquisition section, and extracts as gripping points a pair representative of each cluster, and a generation section that, based on gripping points extracted by the extraction section, generates grasp information indicating a relative positional relationship between the target object and the gripping section for a case of the target object being gripped by the gripping section.

Moreover, the target object information may be information of a mesh structure resulting from joining plural polygonal shaped planes.

Moreover, as the condition, the extraction section may extract the gripping points with an angle formed between the planes that each of the two points belong to, with an opening of the gripping section, and with an index representing respective stability when the target object is gripped by the gripping section, that are within respective set ranges of values.

Moreover, a pre-processing section may also be included that executes at least one pre-processing on the target object information acquired by the acquisition section from out of simplification processing to reduce a number of the planes, smoothing processing to remove noise, optimization processing to make size variation of the planes not more than a threshold, or symmetry detection processing to detect a group of planes having a single rotation axis, and the extraction section may extract the gripping points based on the target object information after pre-processing by the pre-processing section.

The pre-processing section may evaluate the target object information acquired by the acquisition section by evaluating a number of the planes, whether or not there is noise therein, and size variation of the planes, and execute the pre-processing based on results of the evaluation.

The extraction section may perform the clustering after one pair of similar pairs has been removed from the pairs.

The extraction section may extract a pair closest to a center of the cluster as a pair representative of the cluster.

The generation section may generate the grasp information based on a position and orientation of the target object and the gripping section in a state in which the target object has been gripped by the gripping section at the gripping points for each state resulting from rotating the gripping section a specific angle at a time relative to the target object about an axis of a straight line passing through the gripping points.

The generation section may remove any of the grasp information for which there is interference between the target object and the gripping section.

The generation section may append an index indicating a stability of gripping state to each of the grasp information.

Moreover, a grasp information generation method according to the present disclosure is a method including an acquisition section acquiring target object information indicating a three dimensional shape of a target object for gripping by a gripping section, and gripping section information related to a shape of the gripping section, an extraction section performing clustering on pairs of two points on the target object that are pairs satisfying a condition based on the target object information and the gripping section information acquired by the acquisition section, and extracting as gripping points a pair representative of each cluster, and a generation section, based on gripping points extracted by the extraction section, generating grasp information indicating a relative positional relationship between the target object and the gripping section for a case of the target object being gripped by the gripping section.

A grasp information generation program according to the present disclosure is a program that causes a computer to function as an acquisition section that acquires target object information indicating a three dimensional shape of a target object for gripping by a gripping section, and gripping section information related to a shape of the gripping section, an extraction section that performs clustering on pairs of two points on the target object that are pairs satisfying a condition based on the target object information and the gripping section information acquired by the acquisition section, and extracts as gripping points a pair representative of each cluster, and a generation section that, based on the gripping points extracted by the extraction section, generates grasp information indicating a relative positional relationship between the target object and the gripping section for a case of the target object being gripped by the gripping section.

Advantageous Effects

The grasp information generation device, method, and program according to the present disclosure enable consistent grasp information to be generated while suppressing computational time.

BRIEF DESCRIPTION OF DRAWINGS

Fig. 1 is a diagram to explain grasp information.
Fig. 2 is a diagram to explain grasp information.
Fig. 3 is a block diagram illustrating a hardware configuration of a grasp information generation device.
Fig. 4 is a block diagram illustrating an example of a functional configuration of a grasp information generation device.
Fig. 5 is a diagram illustrating an example of target information resulting from execution of simplification processing.
Fig. 6 is a diagram illustrating an example of target information resulting from execution of smoothing processing.

Fig. 7 is a diagram illustrating an example of target information resulting from execution of optimization processing.

Fig. 8 is a diagram to explain an angle θ formed between normal vectors of two planes.

Fig. 9 is a diagram to explain an angle θ formed between normal vectors of two planes.

Fig. 10 is a diagram to explain computation of $N_{distance}$ and $H_{distance}$.

Fig. 11 is a diagram to explain a condition related to stability during gripping.

Fig. 12 is a diagram to explain computation of an index related to each condition.

Fig. 13 is a diagram to explain computation of an index related to each condition.

Fig. 14 is a diagram to explain extraction of pairs based on each condition.

Fig. 15 is a diagram to explain removing a similar pair.

Fig. 16 is a diagram to explain gripping points based on a pair.

Fig. 17 is a diagram to explain clustering of pairs.

Fig. 18 is a diagram illustrating an example of an array of each state resulting from rotation about an axis of gripping points.

Fig. 19 is a diagram to explain removing states with interference.

Fig. 20A is a diagram to explain ranking of grasp information.

Fig. 20B is a diagram to explain ranking of grasp information.

Fig. 20C is a diagram to explain ranking of grasp information.

Fig. 20D is a diagram to explain ranking of grasp information.

Fig. 20E is a diagram to explain ranking of grasp information.

Fig. 20F is a diagram to explain ranking of grasp information.

Fig. 20G is a diagram to explain ranking of grasp information.

Fig. 20H is a diagram to explain ranking of grasp information.

Fig. 21 is a flowchart illustrating a flow of grasp information generation processing.

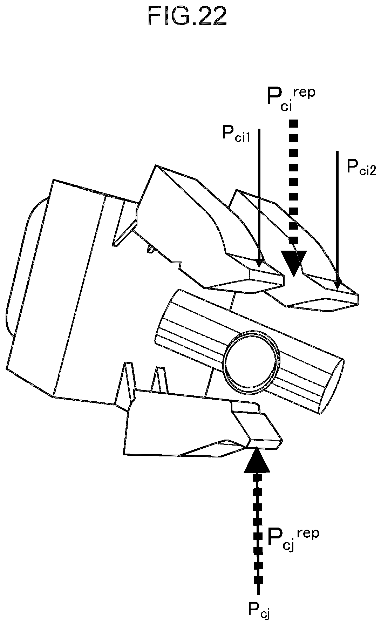

Fig. 22 is a diagram to explain an example of application to a three-fingered robot hand.

DESCRIPTION OF EMBODIMENTS

Description follows regarding an example of an exemplary embodiment of the present disclosure, with reference to the drawings. Note that the same reference numerals are appended to the same or equivalent configuration elements and portions of each of the drawings. Moreover, for ease of explanation dimensions and proportions are sometimes exaggerated in the drawings and differ from actual proportions.

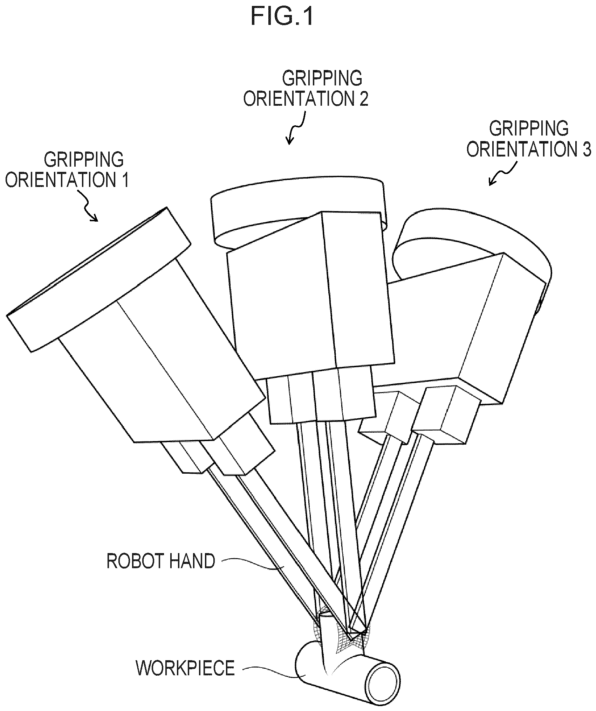

A grasp information generation device according to the present exemplary embodiment generates grasp information that is information indicating plural candidates for a relative position relationship between a gripping section and a target object gripped by the gripping section. Explanation follows, with reference to Fig. 1, regarding the grasp information for an example in which the gripping section is a robot hand and the target object is a workpiece. Note that in the present exemplary embodiment, explanation is of an example of a case in which, as illustrated in Fig. 1, the gripping section is a robot hand attached to a leading end of a robot arm and including two parallel opposing fingers.

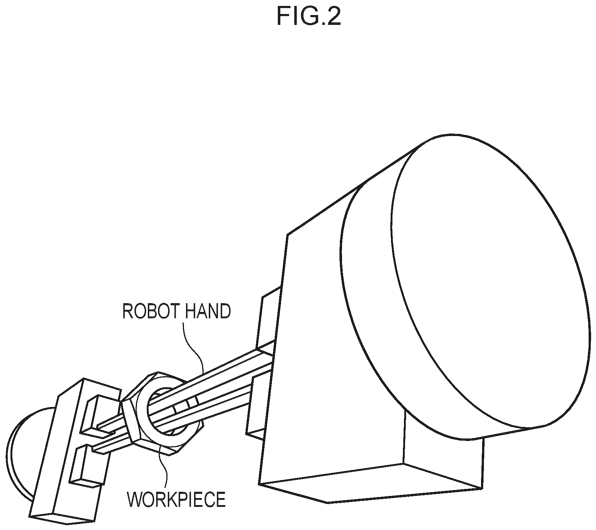

The grasp information is information of relative coordinates (x, y, z) and relative orientation (roll, pitch, yaw) (hereafter referred to as "gripping orientation") of a robot hand with respect to a workpiece at a reference position when the workpiece has been gripped by the robot hand, for example as illustrated in Fig. 1. The grasp information is grasp information in which plural gripping orientations are put in a list. Three gripping orientation (gripping orientations 1, 2, 3) are illustrated in the example of Fig. 1, and grasp information for many gripping orientations (for example several hundred patterns) are contained in the list. Note that Fig. 1 illustrates an example of external gripping in which the workpiece (target object) is gripped sandwiched from the outside by the robot hand (gripping section). The present exemplary embodiment is also applicable to internal gripping in which, for example as illustrated in Fig. 2, the workpiece is gripped by a robot hand being inserted inside a ring shaped workpiece and the robot hand being pressed outward from the inside.

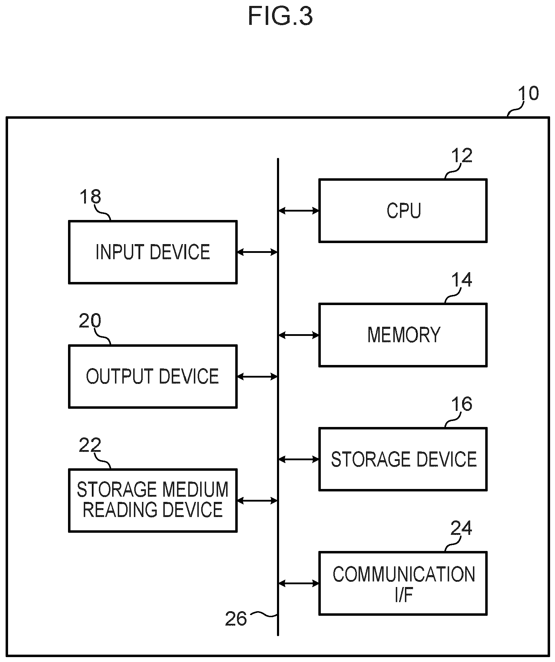

Fig. 3 is a block diagram illustrating a hardware configuration of a computer that functions as a grasp information generation device 10 according to the present exemplary embodiment. As illustrated in Fig. 3, the grasp information generation device 10 includes a central processing unit (CPU) 12, memory 14, a storage device 16, an input device 18, an output device 20, a storage medium reading device 22, and a communication interface I/F 24. Each of the configuration is connected so as to be capable of communicating with each other through a bus 26.

A grasp information generation program for executing grasp information generation processing, described later, is stored on the storage device 16. The CPU 12 is a central processing unit that executes various programs and controls each configuration. Namely, the CPU 12 reads a program from the storage device 16, and executes the program using the memory 14 as workspace. The CPU 12 controls each of the above configuration and performs various computational processing according to the program stored on the storage device 16.

The memory 14 is configured from random access memory (RAM) and serves as a workspace to temporarily store programs and data. The storage device 16 is configured from read only memory (ROM) and a hard disk drive (HDD), solid state drive (SSD), or the like, and stores various programs including an operating system and various data.

The input device 18 is, for example, a keyboard and a mouse or the like, and is a device for performing various input. The output device 20 is, for example, a device such as a display, a printer, or the like for outputting various information. The output device 20 may also function as the input device 18 by employing a touch panel display therefor.

The storage medium reading device 22 performs reading of data stored on various storage medium, such as a compact disc (CD)-ROM, a digital versatile disc (DVD)-ROM, a Blu-ray disc, a universal serial bus (USB) memory, or the like, and writing of data to the storage medium. The communication I/F 24 is an interface for communication with other devices and employs, for example, a standard such as, for example, Ethernet (registered trademark), FDDI, or Wi-Fi (registered trademark).

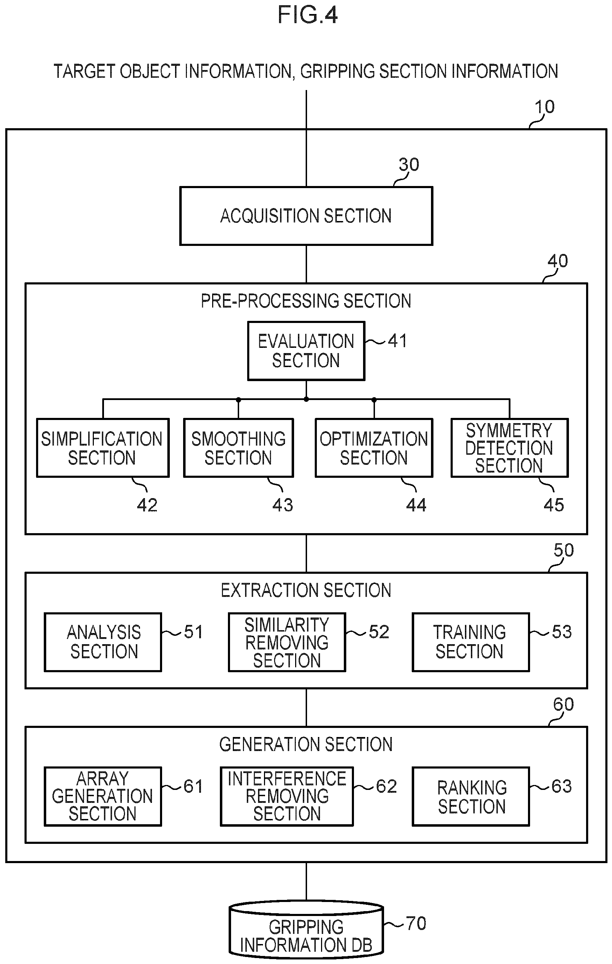

Next, description follows regarding a functional configuration of the grasp information generation device 10 according to the present exemplary embodiment. Fig. 4 is a block diagram illustrating an example of a functional configuration of the grasp information generation device 10. As illustrated in Fig. 4, the grasp information generation device 10 includes, as functional configuration, an acquisition section 30, a pre-processing section 40, an extraction section 50, and a generation section 60. Each functional configuration is implemented by the CPU 12 reading a grasp information generation program stored on the storage device 16 and expanding and executing the grasp information generation program in the memory 14.

The acquisition section 30 acquires target object information indicating a three dimensional shape of a target object gripped by the gripping section, and gripping section information related to a shape of the gripping section. The target object information is information of a mesh structure configured from joining together plural polygonal shaped (for example triangular shaped) planes. The target object information includes, for example, coordinate information for respective apexes and centers of each plane in a local coordinate system of the target object. The gripping section information includes information such as a shape, a movement range, and the like of the gripping section. The acquisition section 30 passes the acquired target object information to the pre-processing section 40, and passes the acquired gripping section information to the extraction section 50.

The pre-processing section 40 executes pre-processing on the target object information received from the acquisition section 30. More specifically, the pre-processing section 40 includes an evaluation section 41, a simplification section 42, a smoothing section 43, an optimization section 44, and a symmetry detection section 45.

The evaluation section 41 evaluates a number of the planes configuring the target object information, whether or not there is noise in the target object information, and size variation of the planes configuring the target object information. For example, in cases in which the target object information input to the grasp information generation device 10 is information that had been prepared for an objective of manufacturing the target object using a three dimensional printer or the like, sometimes there is information more detailed than needed to generate the grasp information. In such cases the mesh structure information that is the target object information would also be detailed, and there would sometimes be a very large number of planes configuring the target object information. In order to evaluate whether or not the number of planes configuring the target object information exceeds a number required to generate the grasp information or not, for example, the evaluation section 41 evaluates whether or not a ratio of the number of planes to the size of the target object is within a threshold.

Moreover, for example, the evaluation section 41 determines whether or not there is noise in the target object information based on information related to the generation method of the target object information. More specifically, the evaluation section 41 may determine that the target object information does not contain noise in cases in which the target object information is information generated using computer graphics, such as in computer-aided design (CAD) or the like. Moreover, the evaluation section 41 may determine that the target object information contains noise in cases in which the target object information is information generated based on three dimensional point cloud data measuring the target object using a measurement device such as a three dimensional scanner or the like. Note that sometimes even in three dimensional point cloud data there is a low level of noise at a level not requiring smoothing processing, described later. Thus the evaluation section 41 may, for example, be configured so as to evaluate a noise level of the target object information using a method such as an entropy-based approach, a Gaussian-based approach, or the like. Based on the evaluation result, the evaluation section 41 executes pre-processing using the simplification section 42, the smoothing section 43, and the optimization section 44, respectively.

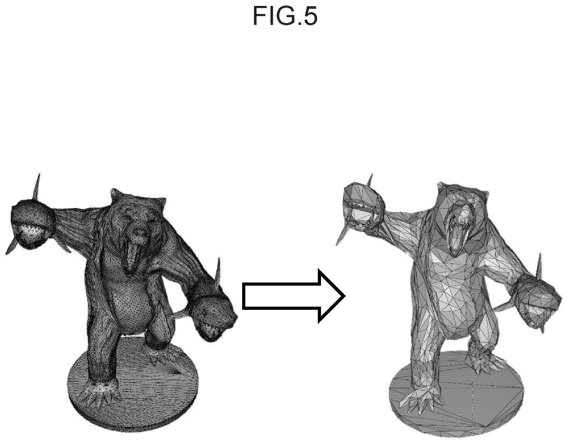

The simplification section 42 executes simplification processing to reduce the number of planes configuring the target object information in cases in which the number of planes configuring the target object information is evaluated by the evaluation section 41 as being more than necessary. More specifically, in cases in which edges, namely sides of planes, have been eliminated from the target object information, the simplification section 42 reduces the number of planes by changing the shape of the target object between before and after elimination so as to eliminate edges to within a threshold. Fig. 5 illustrates an example of target object information with a number of planes reduced by simplification processing.

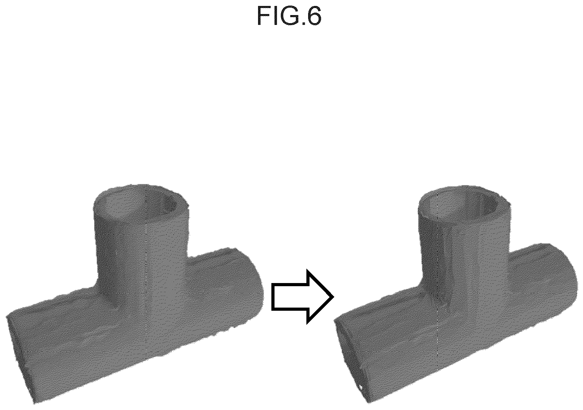

The smoothing section 43 executes smoothing processing to remove noise from the target object information in cases in which the target object information has been evaluated as containing noise by the evaluation section 41, or in cases in which the noise level has been evaluated as a specific threshold or greater. More specifically, the smoothing section 43 adopts a noise removal approach, and merges very small planes generated by noise into an adjacent plane. Fig. 6 illustrates an example in which indentations and projections in the external shape of the target object have been smoothed by such smoothing processing.

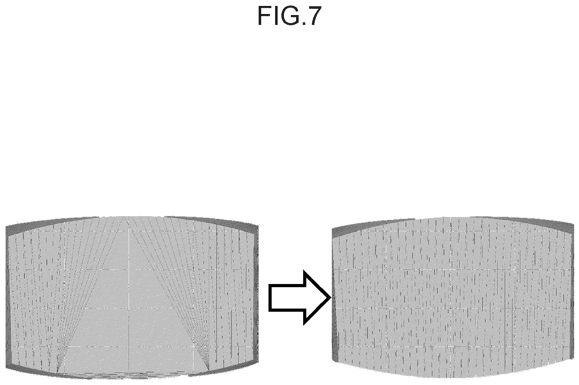

The optimization section 44 executes optimization processing to make size variation of the plural planes configuring the target object information as evaluated by the evaluation section 41 a threshold or lower. Theoretically an optimized mesh structure is configured by joining planes having a fixed size and fixed shape. In cases in which the target object information is such an optimized mesh structure, in the generation of the grasp information as described below, uniformly distributed grasp information can be generated so as to cover an entire task, this being gripping the target object using the gripping section. Thus the optimization section 44 specifically performs merging and dividing of planes such that the size variation of the plural planes is the threshold or lower. Fig. 7 illustrates an example of target object information that has had optimization processing executed thereon.

The symmetry detection section 45 executes symmetry detection processing on the plural planes configuring the target object information to detect groups of planes having a single rotation axis (hereafter referred to as "symmetry planes"). The grasp information generated based on all gripping points (described in detail later) related to a single symmetry plane expresses the same gripping orientation. This means that, for example, in grasp information generated based on a given gripping point, in cases in which there is interference between the target object and the gripping section, in cases in which the approach angle is difficult, or the like, the interference and difficulties with the approach angle can be easily avoided by selecting another gripping point on the same symmetry plane. This means that the symmetry detection section 45 detects the symmetry planes for the purpose of simplification processing of a later stage. Note that difficulties in the approach angle refers to the orientation of the robot to realize the gripping orientation, as indicated by the grasp information, being difficult due to physical limits of the robot, namely, due to limits in the degrees of freedom of joints of the robot.

The pre-processing section 40 passes the target object information after pre-processing to the extraction section 50.

Based on the target object information after pre-processing by the pre-processing section 40, the extraction section 50 performs clustering of pairs of two planes related to two points on the target object that are pairs that have satisfied conditions based on the target object information and the gripping section information, and extracts gripping points based on a representative pair in each cluster. More specifically, the extraction section 50 includes an analysis section 51, a similarity removing section 52, and a training section 53.

The analysis section 51 uses, as the conditions, the fact that an angle formed between the two planes, a degree of opening of the gripping section, and an index representing stability during gripping is within respective specific ranges, and extracts pairs of two planes satisfying the condition. Specific explanation follows regarding each condition. In the following a $k^{th}$ plane is denoted "$F_k$", and a center of the plane $F_k$ is denoted "$c_k$". Note that for k, k = 1, 2, ..., max, wherein max is the number of planes configuring the target object information.

First description follows regarding a condition related to the angle formed between two planes. The analysis section 51 uses the following Equation (1) to find an angle $\theta_{i,j}$ formed between a normal vector $N_i^{\rightarrow}$ to the plane $F_i$ passing through $c_i$ (in the drawings and Equations the "$\rightarrow$" above $N_i$ denotes a vector, similar also applies below), and a normal vector $N_j^{\rightarrow}$ to the plane $F_j$ passing through $c_j$. The normal vectors $N_i^{\rightarrow}$ and $N_j^{\rightarrow}$ are respectively a direction toward the inside of a plane and a direction toward the outside of the plane.

$$\theta_{i,j} = cos^{-1}\left(\frac{\vec{N_i} \cdot \vec{N_j}}{\|\vec{N_i}\|\|\vec{N_j}\|}\right) * \frac{180}{\pi} \qquad (1)$$

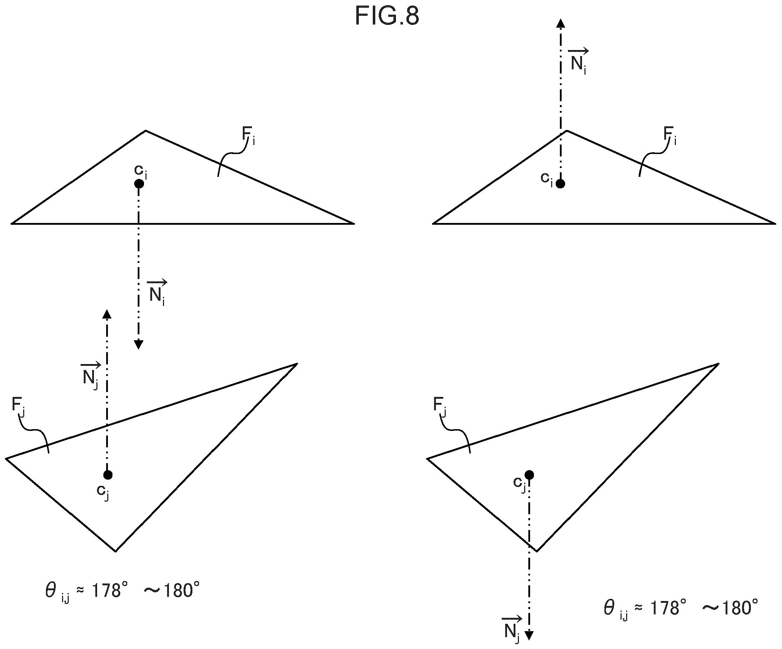

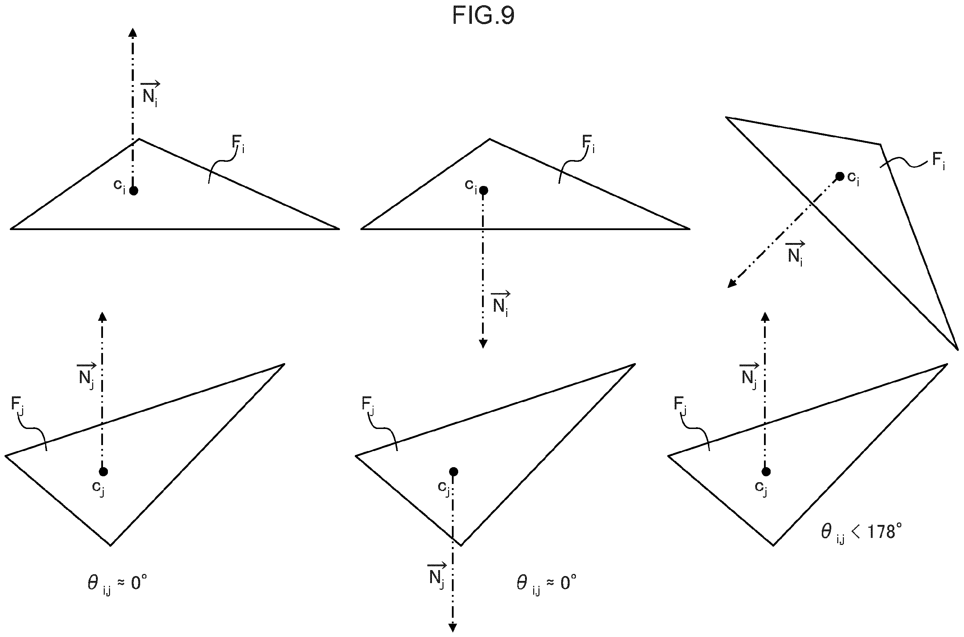

When $\theta_{i,j}$ is within a specific range, the analysis section 51 determines that the pair of the plane $F_i$ and the plane $F_j$ have satisfied the condition related to the angle formed between two planes. For example, in a cases in which $\theta_{i,j}$ is from 178° to 180° as illustrated in Fig. 8, the analysis section 51 determines that the pair of the plane $F_i$ and the plane $F_j$ have satisfied the condition related to the angle formed between two planes. Note that two planes that are internally grippable are illustrated at the left of Fig. 8, and two planes that are externally grippable are illustrated at the right of Fig. 8. As illustrated in Fig. 9, gripping by the gripping section is not able to be performed in cases in which $\theta_{i,j}$ is close to 0° and case in which $\theta_{i,j}$ is smaller than 178°, and the analysis section 51 determines that the condition related to the angle formed between two planes has not been satisfied for the pair of the plane $F_i$ and the plane $F_j$. Note that the angle of $\theta_{i,j}$ being 178° as described above is merely an example, and this angle is a value that depends on the physical properties of the gripping section.

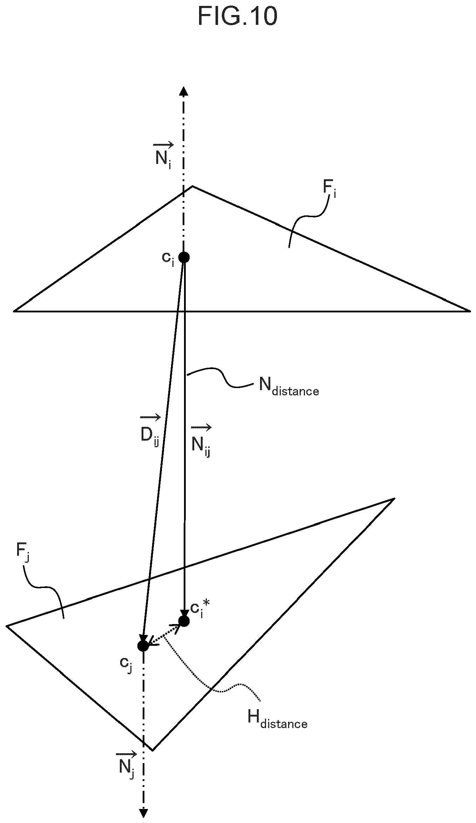

Next, description follows regarding a condition related to the degree of opening of the gripping section. As illustrated in Fig. 10 and the following Equation (2), the analysis section 51 finds a vector $D_{ij}$ $\rightarrow$ from a center $c_i$ of the plane $F_i$ toward a center $c_j$ of plane $F_j$. The analysis section 51 finds a vector $N_{ij}\rightarrow$ that is parallel to a normal vector $N_i$ $\rightarrow$ of the plane $F_i$ and that is a vector from $c_i$ toward the plane $F_j$. A point of intersection between the vector $N_{ij}\rightarrow$ and the plane $F_j$, namely an orthogonal projection point of $c_i$ onto the plane $F_j$, is taken as $c_i{}^*$. The analysis section 51 then computes a magnitude of $N_{ij}$ represented by Equation (3) as a distance $N_{distance}$ between points $c_i$ and $c_i{}^*$. In the following the $N_{distance}$ between the plane $F_i$ and the plane $F_j$ is denoted "$N_{i,j}$". Note that $N_{i,j} < 0$ for cases of external gripping as illustrated at the right of Fig. 8 or in Fig. 10, and $N_{i,j} > 0$ for cases of internal gripping as illustrated at the left of Fig. 8.

$$\overrightarrow{D_{ij}} = c_j - c_i \qquad (2)$$

$$N_{distance} = N_{ij} = \left\| \overrightarrow{N_{ij}} \right\| = \frac{\overrightarrow{D_{ij}} \cdot \overrightarrow{N_i}}{\left\| \overrightarrow{N_i} \right\|} \qquad (3)$$

The analysis section 51 determines that the condition related to the degree of opening of the gripping section is satisfied for the pair of the plane $F_i$ and the plane $F_j$ in cases in which a magnitude of $N_{i,j}$ is within a range of the degree of opening of the gripping section. Note that the degree of opening of the gripping section is, in the present exemplary embodiment, a width of an opening between the two fingers serving as a robot hand. In cases in which a maximum value $Gripper_{max}$ of the degree of opening of the gripping section is, for example, 50 mm, then the analysis section 51 uses the following Equation (4) as the condition related to the degree of opening of the gripping section.

$$1 < |N_{i,j}| < Gripper_{max} = 50 \text{ mm} \qquad (4)$$

Note that in above Equation (4) as an example $Gripper_{max} = 50$ mm, however the value of $Gripper_{max}$ is a value that depends on the physical properties of the gripping section.
Next description follows regarding a condition related to stability during gripping. As illustrated in Fig. 10 and in following Equation (5), the analysis section 51 computes a distance $H_{distance}$ between $c_j$ and $c_i{}^*$ as an index to express the stability during gripping. The greater the magnitude of the $H_{distance}$, the greater the degree of momentum induced when the target object has been gripped by the two-fingered robot hand. This means that the stability during gripping can be expressed by the $H_{distance}$.

$$H_{distance} = \sqrt{\left\| \overrightarrow{D_{ij}} \right\|^2 - \left\| \overrightarrow{N_{ij}} \right\|^2} \qquad (5)$$

For example, when an angle formed between two planes in a range up to 180° is taken as a range that enables stable gripping, then a threshold $H_{max}$ of the $H_{distance}$ is determined according to this angle. When the threshold $H_{max}$ is 3 mm, for example, the analysis section 51 takes the condition related to the stability during gripping according to the following Equation (6). Note that in the following the $H_{distance}$ between the plane $F_i$ and the plane $F_j$ is denoted "$H_{i,j}$".

$$0 \leq H_{i,j} < H_{max} = 3 \text{ mm} \qquad (6)$$

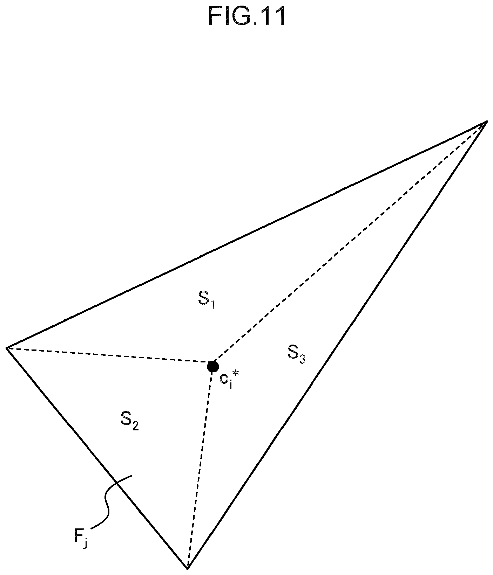

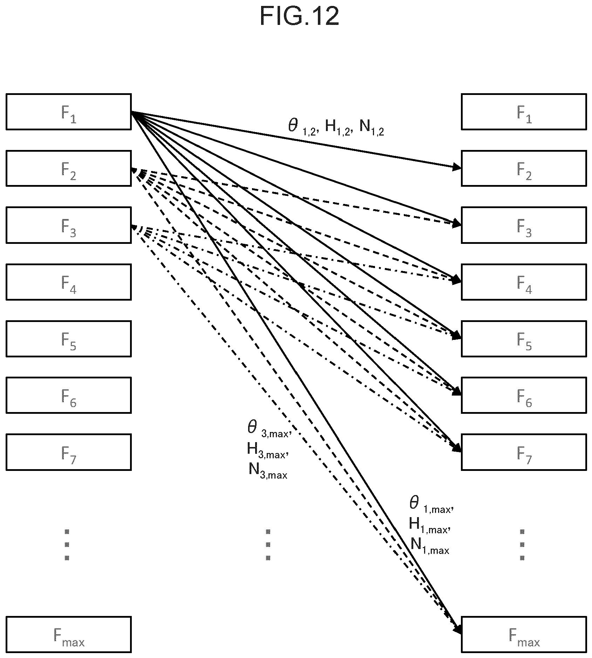

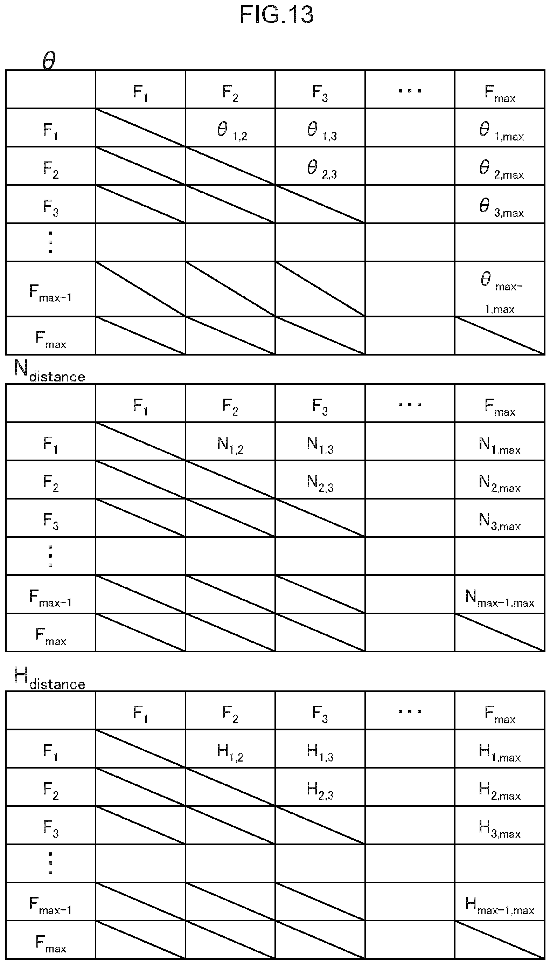

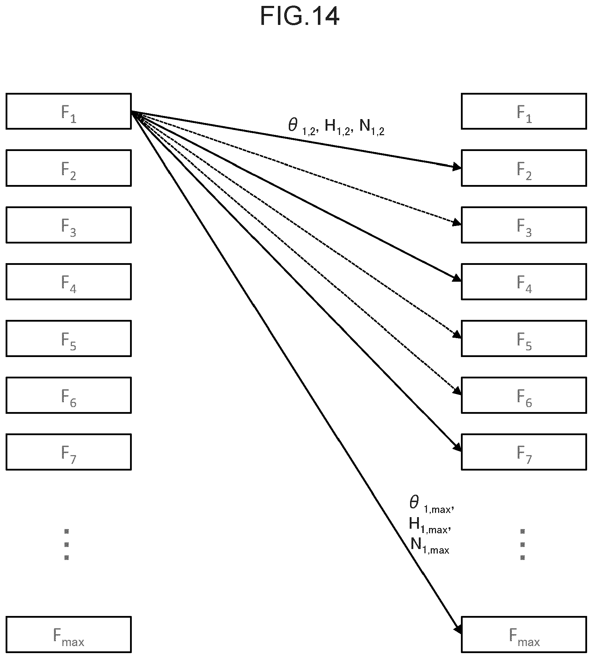

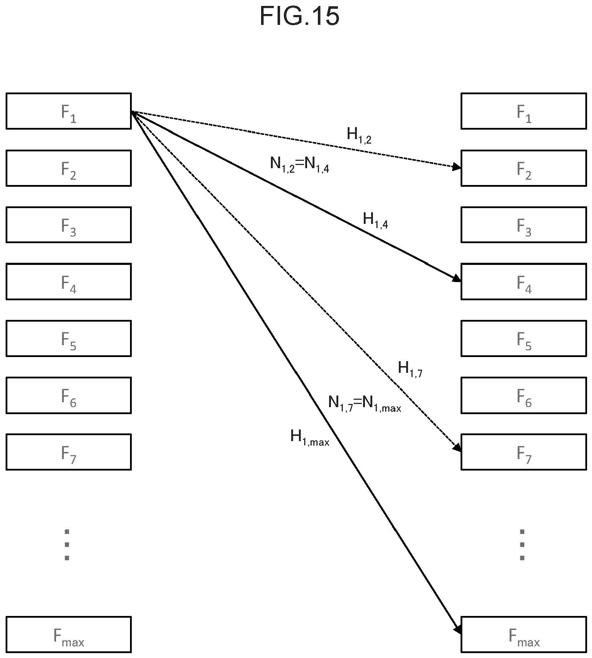

Note that $H_{max} = 3$ mm is employed as an example in Equation (6), however the value of $H_{max}$ is a value that depends on the physical properties of the gripping section.
Moreover, the analysis section 51 may determine that the condition related to the stability during gripping has been satisfied in cases in which the point $c_i{}^*$ is contained in plane $F_j$ even though the condition of Equation (6) has not been satisfied. The analysis section 51 may, for example, determine whether or not the point $c_i{}^*$ is contained in plane $F_j$ by, for example as illustrated in Fig. 11, determining whether or not a sum $(S_1 + S_2 + S_3)$ of the surface area of three triangles formed by lines connecting the $c_i{}^*$ to each of the apexes of $F_j$ is equivalent to the surface area of $F_j$.
As illustrated in Fig. 12 and Fig. 13, for all of the pairs of two planes the analysis section 51 computes the above $\theta_{i,j}$, $N_{i,j}$, and $H_{i,j}$ and extracts pairs $ij$ satisfying all of the conditions. Extracting the pairs of two planes satisfying all of the conditions, as illustrated in Fig. 14, enables a number of the pairs to be extracted that is reduced from the total number of pairs of two planes. Note that in Fig. 14 the solid line arrows indicates extracted pairs, and the broken line arrows indicate non-extracted pairs, namely pairs that have been eliminated. Similar applies in Fig. 15, described below. The analysis section 51 passes the extracted pairs to the similarity removing section 52.

The similarity removing section 52 removes one pair of similar pairs from out of the pairs received from the analysis section 51. More specifically, the similarity removing section 52 may leave a pair having a least $H_{distance}$ for each unique $N_{distance}$ from out of the pairs $_{ij}$ related to plane $F_i$, and remove the remaining pair. Suppose for the pair $_{1,2}$ and the pair $_{1,4}$ that, for example, $N_{1,2} = N_{1,4}$ and $H_{1,2} > H_{1,4}$. In such cases, as illustrated in Fig. 15, the similarity removing section 52 leaves pair $_{1,4}$ and removes pair $_{1,2}$. Similarly suppose for the pair $_{1,7}$ and the pair $_{1,max}$ that, for example, $N_{1,7} = N_{1,max}$ and $H_{1,7} > H_{1,max}$. In such cases, as illustrated in Fig. 15, the similarity removing section 52 leaves the pair $_{1,max}$ and removes the pair $_{1,7}$. The similarity removing section 52 performs such processing on each of the planes $F_i$. The similarity removing section 52 passes the remaining pairs that have not been removed to the training section 53.

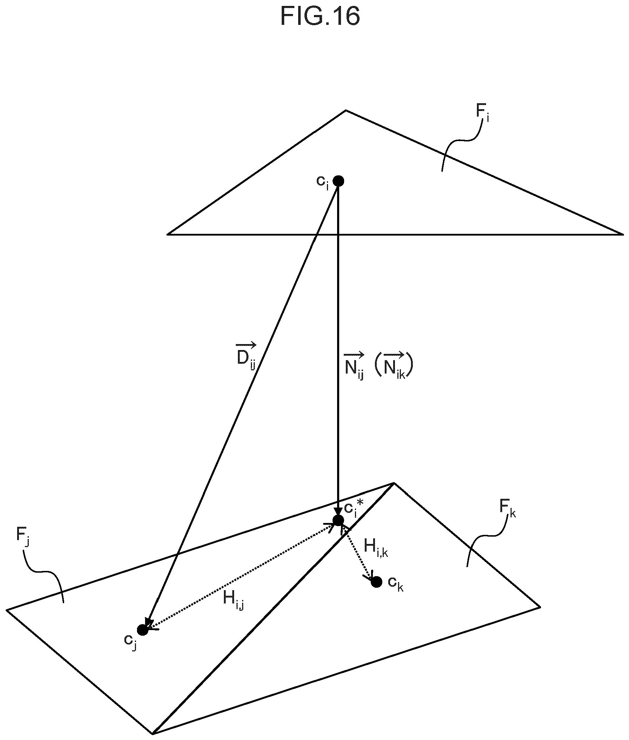

The training section 53 performs clustering on the pairs received from the similarity removing section 52. More specifically, the training section 53 generates a feature vector $V_{ij} = (x_i, y_i, z_i, x_j, y_j, z_j, N_{i,j})$ representing a pair $_{ij}$. $(x_i, y_i, z_i)$ are coordinates of $c_i$, and $(x_j, y_j, z_j)$ are coordinate of $c_j$. Based on the position of each of the feature vectors $V_{ij}$ in feature vector space, the training section 53 performs clustering of the pairs $_{ij}$ using a method such as a MeanShift method or the like. The training section 53 selects a feature vector to be employed as a representative point in each cluster. For example, the training section 53 may find a center of each cluster, and select the feature vector nearest to the center as the representative point. The training section 53 extracts a gripping point based on the pair $_{ij}$ corresponding to the selected feature vector $V_{ij}$. For example, as illustrated in Fig. 16, in cases in which the $c_i^*$ of the pair $_{ij}$ corresponding to the selected feature vector $V_{ij}$ is present on the plane $F_j$, then the training section 53 extracts the pair $(c_i, c_i^*)$ as the gripping point. However, in cases in which the $c_i^*$ of the pair $_{ik}$ corresponding to the selected feature vector $V_{ik}$ is not present on the plane $F_k$, then the training section 53 extracts the pair $(c_i, c_k)$ as the gripping points.

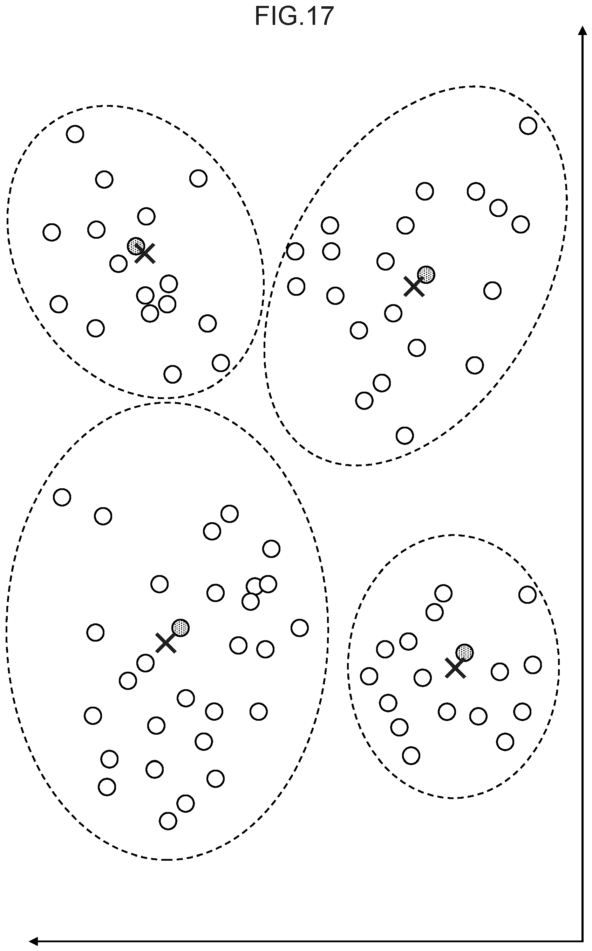

Fig. 17 schematically illustrating a way of clustering of the feature vectors $V_{ij}$. Note that in Fig. 17, for ease of explanation the feature vector space is represented in two dimensions. Each circle mark in Fig. 17 represents a feature vector $V_{ij}$, broken line ellipses represent each cluster, and $\times$ marks represent a center of the cluster. From out of the circle marks, the shaded circle marks represent a feature vector $V_{ij}$ selected as the representative point for each cluster. The extraction section 50 passes the gripping points extracted by the training section 53 to the generation section 60.

The generation section 60 generates grasp information based on the gripping points received from the extraction section 50. More precisely, the generation section 60 includes an array generation section 61, an interference removing section 62, and a ranking section 63.

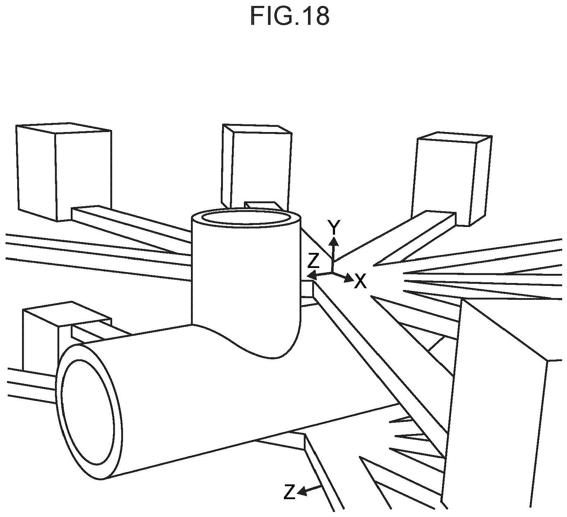

The array generation section 61 generates an array (matrix) of, in a state in which the target object is gripped at the gripping points by the gripping section, rotated states resulting from successively rotating the gripping section by a specific angle relative to the target object about an axis of a straight line passing through two points that the gripping points. The array includes information about the position and orientation of the target object and the gripping section in each state indicated by the array. Fig. 18, illustrates an example of the array. As illustrated in Fig. 18 for a case in which the straight line passing through the two points of the gripping points is the y-axis, the x-axis and the z-axis are both conceivable as the rotation axis. However based on the detection results of the symmetry detection section 45, these result in the same gripping orientations between arrays and in the generation of superimposed grasp information, and so in the present exemplary embodiment the y-axis is employed as the rotation axis. The array generation section 61 passes the generated array to the interference removing section 62.

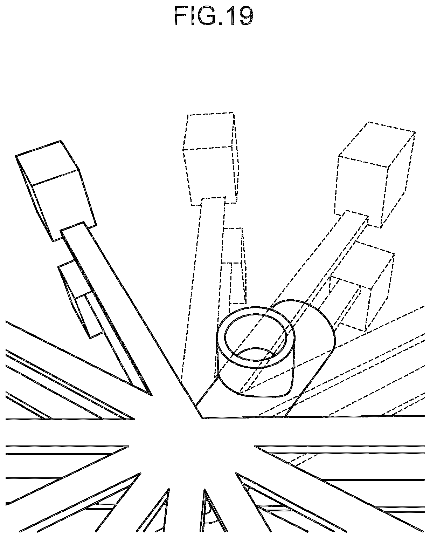

From out of each of the states indicated by the array received from the array generation section 61, the interference removing section 62 removes from the array any state with interference between the target object and the gripping section. More specifically, as illustrated in Fig. 19, for each state of the array, the interference removing section 62 removes any states for which there is a superimposed region present between the shape of the target object as indicated by the target object information and the shape of the gripping section as indicated by the gripping section information. Fig. 19 illustrates an example in which the states indicated by the broken lines are removed from the array. For each of the states of the array resulting from removing the states with interference between the target object and the gripping section, the interference removing section 62 generates grasp information from the information about the position and orientation of the target object and the gripping section, and passes this grasp information to the ranking section 63.

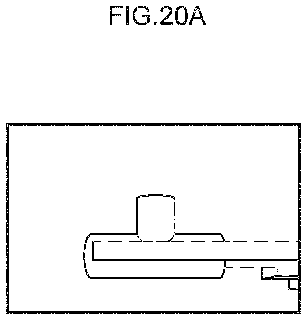

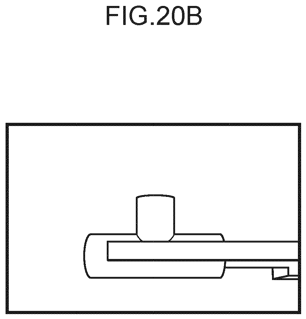

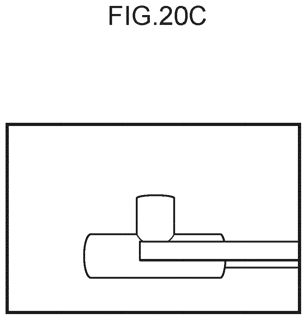

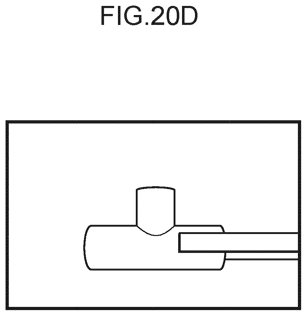

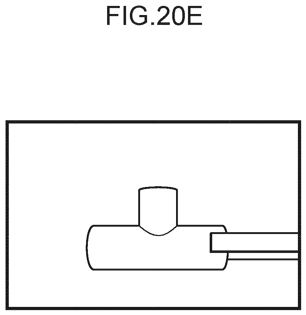

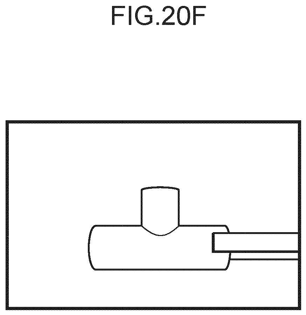

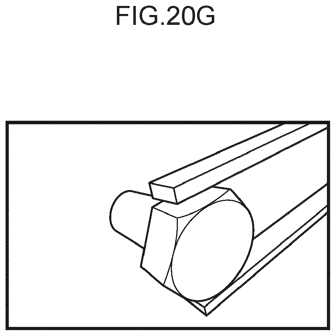

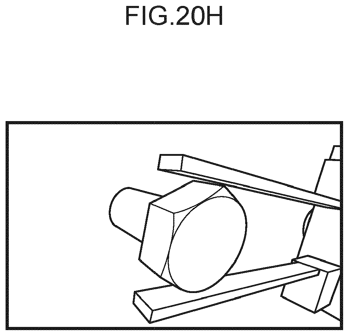

The ranking section 63 appends an index indicating the stability of the gripping state to each grasp information. More specifically, the ranking section 63 computes a contact surface area between the target object and the gripping section in a gripped state based on the shape of the target object as indicated in the target object information, on the shape of the gripping section as indicated in the gripping section information, and on the grasp information. The ranking section 63 appends an index indicating higher stability as the contact surface area gets larger. Thus grasp information appended with the index indicating a high stability represents a high ranking. For example, in the examples of (A) to (F) of Fig. 20, (A) to (F) are in sequence from the higher ranking. Moreover, in the examples of (G) and (H) of Fig. 20, (G) has a higher ranking than that of (H). By appending this index, high stability grasp information can be selected efficiently, such as selecting from the plural grasp information candidates a gripping orientation having a high ranking, when computing a robot orientation using the grasp information. Note that the index indicating the stability of the gripping state is not limited to the example of contact surface area described above. For example, a distance between a center of gravity of the target object and a center of gravity of a contact region between the target object and the gripping section in the gripping state may be employed either instead of the contact surface area, or as well as the contact surface area.

The generation section 60 outputs the grasp information appended with the index, and this is stored in a grasp information database (DB) 70.

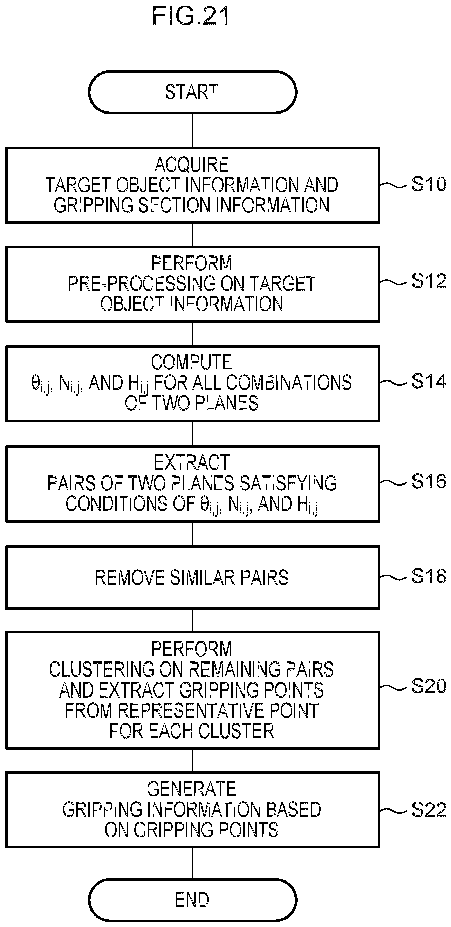

Next, description follows regarding operation of the grasp information generation device 10 according to the present exemplary embodiment. Fig. 21 is a flowchart illustrating a flow of grasp information generation processing executed by the CPU 12 of the grasp information generation device 10. The grasp information generation processing is an example of a grasp information generation method according to the present disclosure. The CPU 12 functions as each functional configuration of the grasp information generation device 10 by the CPU 12 reading the grasp information generation program from the storage device 16, and expanding and executing the grasp information generation program in the memory 14 such that the grasp information generation processing illustrated in Fig. 21 is executed.

At step S10, the acquisition section 30 acquires target object information and gripping section information, passes the acquired target object information to the pre-processing section 40, and passes the gripping section information to the extraction section 50.

Next, at step S12, the evaluation section 41 of the pre-processing section 40 evaluates the target object information, and based on the evaluation result causes pre-processing to be executed by the simplification section 42, the smoothing section 43, and the optimization section 44. Moreover, the symmetry detection section 45 executes symmetry detection processing. The pre-processing section 40 passes the target object information after pre-processing to the extraction section 50.

Next, at step S14, the analysis section 51 of the extraction section 50 computes the $\theta_{i,j}$, $N_{i,j}$, and $H_{i,j}$ for all combinations of planes configuring the target object information after pre-processing.

Next, at step S16, the analysis section 51 extracts pairs $_{ij}$ of two planes that satisfy the condition related to the angle formed between two planes using the $\theta_{i,j}$, the condition related to the degree of opening of the gripping section using the $N_{i,j}$, and the condition related to the determinability during gripping using the $H_{i,j}$. Next at step S18, the similarity removing section 52 of the extraction section 50 removes similar pairs from out of the pairs $_{ij}$ related to the plane $F_i$ by leaving a pair having the least $H_{distance}$ for each unique $N_{distance}$ and removing remaining pairs.

Next at step S20, the training section 53 of the extraction section 50 generates a feature vector $V_{ij} = (x_i, y_i, z_i, x_j, y_j, z_j, N_{i,j})$ indicating the pairs $_{ij}$ that remain from the processing of step S18 described above. The training section 53 performs clustering on the pairs $_{ij}$ based on the positions of $V_{ij}$ in feature vector space. The training section 53 then finds the center of each cluster, selects the feature vector $V_{ij}$ closest to the center as the representative point, and extracts gripping points based on the pairs $_{ij}$ corresponding to the selected feature vector $V_{ij}$.

Next at step S22, the array generation section 61 of the generation section 60 generates an array based on the gripping points. Then from the respective states contained in the array, the interference removing section 62 of the generation section 60 removes any states from the array where there is interference between the target object and the gripping section, and generates grasp information for each of the states remaining in the array from the information about the position and orientation of the target object and the gripping section. Furthermore, the ranking section 63 of the generation section 60 appends an index indicating the stability of the gripping state to each of the grasp information. The generation section 60 then outputs the grasp information appended with the index, stores the grasp information in the gripping information DB 70, and ends the grasp information generation processing.

As described above, the grasp information generation device according to the present exemplary embodiment acquires target object information indicating a three dimensional shape of the target object gripped by the gripping section, and gripping section information related to the shape of the gripping section. The grasp information generation device then performs clustering on pairs that are pairs of two points on the target object and that are pairs that satisfy the conditions based on the acquired target object information and the gripping section information, and extracts a pair to act as a representative for each cluster as gripping points. Furthermore, based on the extracted gripping points, the grasp information generation device generates grasp information indicating a relative positional relationship between the target object and the gripping section in cases in which the target object is to be gripped by the gripping section. In this manner, consistent grasp information can be generated while suppressing computational time by clustering pairs of two points on the target object, namely by extracting gripping points using a non-parametric training method.

For example, in the technology described in Non-Patent Document 1 there is a need to adjust eight parameters. However, in the grasp information generation device according to the present exemplary embodiment there are three parameters that need to be adjusted, these being an average shift radius when clustering, the threshold $H_{max}$ defining the condition related to the stability during gripping, and the rotation angle during array generation. Note that the average shift radius is a parameter to adjust the number of generated grasp information.

Moreover, in the grasp information generation device according to the present exemplary embodiment, prior to clustering pairs of two planes, the pairs are reduced in number using the conditions based on the target object information and the gripping section information. Furthermore, the grasp information generation device also eliminates similar pairs. Thereby generation of superimposed grasp information, and generation of unrealistic grasp information can be suppressed from occurring, and also the computational time can be suppressed.

Moreover, in the grasp information generation device according to the present exemplary embodiment, target object information of a mesh structure resulting from joining plural polygonal planes is employed, and pre-processing, such as simplification processing, smoothing processing, optimization processing, symmetry detection processing, and the like is executed on the target object information. This accordingly enables the time needed to generate the grasp information to be reduced even further. For example, in cases in which the number of planes contained in the target object information is about 9000 planes, the grasp information generation device according to the present exemplary embodiment is able to generate grasp information at a speed of 10 times that of the technology described in Non-Patent Document 1.

By automatically generating grasp information using the grasp information generation device according to the present exemplary embodiment, the time required in advance for pre-setting a path plan for a robot can be shortened in pick-and-throw, pick-and-place, pick-and-assembly, or the like.

The technology disclosed herein is applicable to an on-line service for providing CAD files of automatic grasp information records, an additional function to existing grasp information recording software, an additional function to a grip planning system of a three-dimensional simulation base, and the like.

Technology for robot grip planning is important technology for a wide range of robotic applications, such as for robots utilized in logistics, robots utilized in services such as in hospitals, offices, restaurants, and the like, industrial robots such as bulk picking and assembly robots and the like. Technology capable of generating consistent grasp information while suppressing computational time, such as the present exemplary embodiment, is extremely useful in applications compatible with various target objects such as described above.

Note that although in the exemplary embodiment described above examples have been described of a two-fingered robot hand, the technology disclosed herein is applicable to a robot hand having three or more fingers. In such cases a center point of force acting at contact points on the target object with each of the plural fingers may be taken as being points where one of the fingers of the above exemplary embodiment contacts the target object. For example, as illustrated in Fig. 21, consider a case in which there is a three-fingered robot hand configured from two fingers and an opposing parallel single finger, action points of action of force for each of the two fingers on one side on the target object are $c_{i1}$ and $c_{i2}$, and the forces acting at these respective action points are $P_{ci1}$ and $P_{ci2}$. Such a case may be treated as if a force of $P_{cirep}$ is acting at a center $c_i^{rep}$ of the actions point according to a ratio between $P_{ci1}$ and $P_{ci2}$. Note that for the single finger on the other side with a force acting at the action point $c_j$ of the force from the single finger acting on the target object of $P_{cj}$, then $c_j$ may be taken as being a center $c_j^{rep}$ of the action point, and a force of $P_{cj}^{rep}$ (= $P_{cj}$) may be treated as acting at $c_j^{rep}$,

Moreover, in the grasp information generation device according to the present exemplary embodiment, generation of the grasp information of external gripping as illustrated in Fig. 1 can also be applied to generation of grasp information for internal gripping as illustrated in Fig. 2.

Moreover, the grasp information generation processing executed by the CPU reading and executing software (a program) in the above exemplary embodiment may be executed by various processors other than the CPU. Examples of such processors include programmable logic devices (PLD) that allow circuit configuration to be modified post-manufacture, such as a field-programmable gate array (FPGA), and dedicated electric circuits and the like, these being processors including a circuit configuration custom-designed to execute specific processing, such as an application specific integrated circuit (ASIC). Moreover, the grasp information generation processing may be executed by any one of these various types of processor, or may be executed by a combination of two or more of the same type or different types of processor (such as plural FPGAs, or a combination of a CPU and an FPGA). The hardware structure of these various types of processors is more specifically an electric circuit combining circuit elements such as semiconductor elements.

Moreover, although explanation has been given in the exemplary embodiment described above of an embodiment in which the grasp information generation program is prestored (installed) on a storage device, there is no limitation thereto. The program according to the present disclosure may be provided in a format stored on a storage medium such as a CD-ROM, DVD-ROM, Blu-ray disc, USB memory, or the like. Moreover, the program according to the present disclosure may be provided in a format downloadable from an external device over a network.

Explanation of Reference Numerals

10 grasp information generation device
12 CPU
14 memory
16 storage device
18 input device
20 output device
22 storage medium reading device
24 communication I/F
26 bus
30 acquisition section
40 pre-processing section
41 evaluation section
42 simplification section
43 smoothing section
44 optimization section
45 symmetry detection section
50 extraction section
51 analysis section
52 similarity removing section
53 training section
60 generation section
61 array generation section
62 interference removing section
63 ranking section
70 gripping information DB

**Claims**

1. A grasp information generation device comprising:

   an acquisition section that acquires target object information indicating a three dimensional shape of a target object for gripping by a gripping section, and gripping section information related to a shape of the gripping section;
   an extraction section that performs clustering on pairs of two points on the target object that are pairs satisfying a condition based on the target object information and the gripping section information acquired by the acquisition section, and extracts, as gripping points, a pair representative of each cluster; and
   a generation section that, based on gripping points extracted by the extraction section, generates grasp information indicating a relative positional relationship between the target object and the gripping section for a case of the target object being gripped by the gripping section.

2. The grasp information generation device of claim 1, wherein the target object information is information of a mesh structure resulting from joining a plurality of polygonal shaped planes.

3. The grasp information generation device of claim 2, wherein as the condition, the extraction section extracts the gripping points with an angle formed between the planes that each of the two points belong to, with an opening of the gripping section, and with an index representing respective stability when the target object is gripped by the gripping section, which are within respective set ranges of values.

4. The grasp information generation device of claim 2 or claim 3, wherein:

   the grasp information generation device further comprises a pre-processing section that executes at least one pre-processing on the target object information acquired by the acquisition section from among simplification processing to reduce a number of the planes, smoothing processing to remove noise, optimization processing to make size variation of the planes not more than a threshold value, or symmetry detection processing to detect a group of planes having a single rotation axis; and
   the extraction section extracts the gripping points based on the target object information after pre-processing by the pre-processing section.

5. The grasp information generation device of claim 4, wherein the pre-processing section evaluates the target object information acquired by the acquisition section by evaluating a number of the planes, whether or not there is noise, and size variation of the planes, and executes the pre-processing based on results of the evaluation.

6. The grasp information generation device of any one of claim 1 to claim 5, wherein the extraction section performs the clustering after one pair of similar pairs has been removed from the pairs.

7. The grasp information generation device of any one of claim 1 to claim 6, wherein the extraction section extracts a pair closest to a center of the cluster as a pair representative of the cluster.

8. The grasp information generation device of any one of claim 1 to claim 7, wherein the generation section generates the grasp information based on a position and an orientation of the target object and the gripping section in a state in which the target object has been gripped by the gripping section at the gripping points for each state resulting from rotating the gripping section a specific angle, at a time, relative to the target object about an axis of a straight line passing through the gripping points.

9. The grasp information generation device of any one of claim 1 to claim 8, wherein the generation section removes any of the grasp information for which there is interference between the target object and the gripping section.

10. The grasp information generation device of any one of claim 1 to claim 9, wherein the generation section appends an index indicating a stability of gripping state to each of the grasp information.

11. A grasp information generation method comprising:

an acquisition section acquiring target object information indicating a three dimensional shape of a target object for gripping by a gripping section, and gripping section information related to a shape of the gripping section;
an extraction section performing clustering on pairs of two points on the target object that are pairs satisfying a condition based on the target object information and the gripping section information acquired by the acquisition section, and extracting, as gripping points, a pair representative of each cluster; and
a generation section, based on gripping points extracted by the extraction section, generating grasp information indicating a relative positional relationship between the target object and the gripping section for a case of the target object being gripped by the gripping section.

12. A grasp information generation program that causes a computer to function as:

an acquisition section that acquires target object information indicating a three dimensional shape of a target object for gripping by a gripping section, and gripping section information related to a shape of the gripping section;
an extraction section that performs clustering on pairs of two points on the target object that are pairs satisfying a condition based on the target object information and the gripping section information acquired by the acquisition section, and extracts, as gripping points, a pair representative of each cluster; and
a generation section that, based on the gripping points extracted by the extraction section, generates grasp information indicating a relative positional relationship between the target object and the gripping section for a case of the target object being gripped by the gripping section.

## FIG.1

GRIPPING ORIENTATION 2

GRIPPING ORIENTATION 3

GRIPPING ORIENTATION 1

ROBOT HAND

WORKPIECE

# FIG.2

ROBOT HAND

WORKPIECE

# FIG.3

# FIG.4

TARGET OBJECT INFORMATION, GRIPPING SECTION INFORMATION

10

ACQUISITION SECTION — 30

PRE-PROCESSING SECTION — 40

EVALUATION SECTION — 41

| SIMPLIFICATION SECTION | SMOOTHING SECTION | OPTIMIZATION SECTION | SYMMETRY DETECTION SECTION |
|---|---|---|---|
| 42 | 43 | 44 | 45 |

EXTRACTION SECTION — 50

| ANALYSIS SECTION — 51 | SIMILARITY REMOVING SECTION — 52 | TRAINING SECTION — 53 |
|---|---|---|

GENERATION SECTION — 60

| ARRAY GENERATION SECTION — 61 | INTERFERENCE REMOVING SECTION — 62 | RANKING SECTION — 63 |
|---|---|---|

GRIPPING INFORMATION DB — 70

FIG.5

FIG.6

FIG.7

# FIG.8

$F_i$

$c_i$

$\vec{N_i}$

$\vec{N_j}$

$F_j$

$c_j$

$\theta_{i,j} \approx 178° \sim 180°$

$\vec{N_i}$

$F_i$

$c_i$

$F_j$

$c_j$

$\theta_{i,j} \approx 178° \sim 180°$

$\vec{N_j}$

FIG.9

$\vec{N_i}$

$F_i$

$c_i$

$\vec{N_j}$

$F_j$

$c_j$

$\theta_{i,j} \approx 0°$

$F_i$

$c_i$

$\vec{N_i}$

$F_j$

$c_j$

$\vec{N_j}$

$\theta_{i,j} \approx 0°$

$F_i$

$c_i$

$\vec{N_i}$

$\vec{N_j}$

$F_j$

$c_j$

$\theta_{i,j} < 178°$

EP 4 353 425 A1

# FIG.10

# FIG.11

FIG.12

$\theta_{1,2}$, $H_{1,2}$, $N_{1,2}$

$\theta_{3,max}$, $H_{3,max}$, $N_{3,max}$

$\theta_{1,max}$, $H_{1,max}$, $N_{1,max}$

# FIG.13

$\theta$

|  | $F_1$ | $F_2$ | $F_3$ | $\cdots$ | $F_{max}$ |
|---|---|---|---|---|---|
| $F_1$ | | $\theta_{1,2}$ | $\theta_{1,3}$ | | $\theta_{1,max}$ |
| $F_2$ | | | $\theta_{2,3}$ | | $\theta_{2,max}$ |
| $F_3$ | | | | | $\theta_{3,max}$ |
| $\vdots$ | | | | | |
| $F_{max-1}$ | | | | | $\theta_{max-1,max}$ |
| $F_{max}$ | | | | | |

$N_{distance}$

|  | $F_1$ | $F_2$ | $F_3$ | $\cdots$ | $F_{max}$ |
|---|---|---|---|---|---|
| $F_1$ | | $N_{1,2}$ | $N_{1,3}$ | | $N_{1,max}$ |
| $F_2$ | | | $N_{2,3}$ | | $N_{2,max}$ |
| $F_3$ | | | | | $N_{3,max}$ |
| $\vdots$ | | | | | |
| $F_{max-1}$ | | | | | $N_{max-1,max}$ |
| $F_{max}$ | | | | | |

$H_{distance}$

|  | $F_1$ | $F_2$ | $F_3$ | $\cdots$ | $F_{max}$ |
|---|---|---|---|---|---|
| $F_1$ | | $H_{1,2}$ | $H_{1,3}$ | | $H_{1,max}$ |
| $F_2$ | | | $H_{2,3}$ | | $H_{2,max}$ |
| $F_3$ | | | | | $H_{3,max}$ |
| $\vdots$ | | | | | |
| $F_{max-1}$ | | | | | $H_{max-1,max}$ |
| $F_{max}$ | | | | | |

# FIG.14

$\theta_{1,2}$, $H_{1,2}$, $N_{1,2}$

$\theta_{1,max}$, $H_{1,max}$, $N_{1,max}$

# FIG.15

# FIG.16

# FIG.17

FIG.18

FIG.19

FIG.20A

FIG.20B

FIG.20C

FIG.20D

# FIG.20E

FIG.20F

FIG.20G

FIG.20H

# FIG.21

```
          START
            │
┌───────────────────────────┐
│         ACQUIRE           │
│ TARGET OBJECT INFORMATION AND │──── S10
│ GRIPPING SECTION INFORMATION │
└───────────────────────────┘
            │
┌───────────────────────────┐
│         PERFORM           │
│ PRE-PROCESSING ON TARGET  │──── S12
│    OBJECT INFORMATION     │
└───────────────────────────┘
            │
┌───────────────────────────┐
│         COMPUTE           │
│ θ_{i,j}, N_{i,j}, AND H_{i,j} FOR ALL COMBINATIONS │──── S14
│       OF TWO PLANES       │
└───────────────────────────┘
            │
┌───────────────────────────┐
│         EXTRACT           │
│ PAIRS OF TWO PLANES SATISFYING │──── S16
│ CONDITIONS OF θ_{i,j}, N_{i,j}, AND H_{i,j} │
└───────────────────────────┘
            │
┌───────────────────────────┐
│    REMOVE SIMILAR PAIRS   │──── S18
└───────────────────────────┘
            │
┌───────────────────────────┐
│         PERFORM           │
│ CLUSTERING ON REMAINING PAIRS │
│ AND EXTRACT GRIPPING POINTS │──── S20
│ FROM REPRESENTATIVE POINT │
│      FOR EACH CLUSTER     │
└───────────────────────────┘
            │
┌───────────────────────────┐
│        GENERATE           │
│ GRIPPING INFORMATION BASED │──── S22
│   ON GRIPPING POINTS      │
└───────────────────────────┘
            │
           END
```

FIG.22

$P_{ci}^{rep}$

$P_{ci1}$

$P_{ci2}$

$P_{cj}^{rep}$

$P_{cj}$

## INTERNATIONAL SEARCH REPORT

International application No.

**PCT/JP2022/015153**

### A. CLASSIFICATION OF SUBJECT MATTER

***B25J 9/22***(2006.01)i
FI:   B25J9/22 A

According to International Patent Classification (IPC) or to both national classification and IPC

### B. FIELDS SEARCHED

Minimum documentation searched (classification system followed by classification symbols)

B25J9/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-111696 A (SEIKO EPSON CORP) 10 June 2013 (2013-06-10) paragraphs [0032]-[0216], fig. 1-29 | 1-12 |
| A | JP 2016-93879 A (FUJITSU LTD) 26 May 2016 (2016-05-26) paragraphs [0012]-[0055], fig. 1-8 | 1-12 |
| A | JP 2021-79464 A (OMRON CORPORATION) 27 May 2021 (2021-05-27) paragraphs [0038]-[0247], fig. 1-30 | 1-12 |

☐ Further documents are listed in the continuation of Box C.     ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/015153**

| Patent document cited in search report | | | Publication date (day/month/year) | Patent family member(s) | Publication date (day/month/year) |
|---|---|---|---|---|---|
| JP | 2013-111696 | A | 10 June 2013 | (Family: none) | |
| JP | 2016-93879 | A | 26 May 2016 | (Family: none) | |
| JP | 2021-79464 | A | 27 May 2021 | (Family: none) | |

Form PCT/ISA/210 (patent family annex) (January 2015)

**REFERENCES CITED IN THE DESCRIPTION**

**Non-patent literature cited in the description**

- **WEIWEI WAN ; KENSUKE HARADA ; FUMIO KANEHIRO.** Planning Grasps with Suction Cups and Parallel Grippers Using Superimposed Segmentation of Object Meshes. *IEEE Transactions on Robotics,* 2021, vol. 37 (1